# EUROPÄISCHE PATENTSCHRIFT

(11) **EP 3 101 231 B1**
(45) Veröffentlichungstag und Bekanntmachung des Hinweises auf die Patenterteilung: **07.08.2019**
(21) Anmeldenummer: 16172713.6
(22) Anmeldetag: 02.06.2016
(51) Int. Cl.: F01D 5/18, F23R 3/00

(54) **VORRICHTUNG ZUR KÜHLUNG EINER WANDUNG EINES BAUTEILS EINER GASTURBINE**
DEVICE FOR COOLING A WALL OF A COMPONENT OF A GAS TURBINE
DISPOSITIF DE REFROIDISSEMENT D'UNE PAROI D'UN COMPOSANT D'UNE TURBINE À GAZ

(30) Priorität: 05.06.2015 DE 102015210385
(43) Veröffentlichungstag der Anmeldung: 07.12.2016
(73) Patentinhaber: Rolls-Royce Deutschland Ltd & Co KG, 15827 Blankenfelde-Mahlow (DE)
(72) Erfinder: GERENDÁS, Dr.-Ing. Miklós, 15838 Am Mellensee (DE)
(74) Vertreter: Hoefer & Partner Patentanwälte mbB

(56) Entgegenhaltungen:
- EP-A2- 2 937 513
- US-B1- 8 057 181

## Beschreibung

Die Erfindung bezieht sich auf eine Vorrichtung zur Kühlung einer Wandung eines Bauteils einer Gasturbine gemäß dem Oberbegriff des Anspruchs 1.

Im Einzelnen bezieht sich die Erfindung auf eine Vorrichtung zur Kühlung einer Wandung, entlang welcher eine Fluidströmung strömt. Derartige Wandungen sind beispielsweise Brennkammerwände oder Oberflächen von Turbinenschaufeln einer Gasturbine.

Die erfindungsgemäße Vorrichtung weist zumindest einen Einströmkanal auf, durch welchen Kühlluft oder Kühlfluid zugeführt wird. Die aus dem Einströmkanal aus seiner Mündungsöffnung austretende Strömung des Kühlfluids bzw. der Kühlluft strömt zunächst in eine meist taschenartige Ausnehmung, in welche der Einströmkanal mündet. Aus dieser Ausnehmung oder Tasche tritt die Kühlluft oder das Kühlfluid aus und legt sich als Kühlfilm auf die Oberfläche der Wandung.

Erfindungsgemäß kann die Wandung selbst eben oder gewölbt sein. Die Erfindung ist somit an unterschiedlichsten Bauteilen anwendbar.

Die aus der taschenartigen Ausnehmung ausströmende Kühlluft, welche sich filmartig auf die Oberfläche der Wandung auflegt, wird verzögert. Deshalb ist die Ausnehmung vielfach so ausgebildet, dass sie einen sich erweiternden Querschnitt aufweist und als Diffusor wirkt.

Bei der Ausgestaltung derartiger Vorrichtungen zur Kühlung der Wandung ist zu berücksichtigen, dass auf die zu kühlende Oberfläche der Wandung üblicherweise eine Wärmedämmschicht aufgebracht wird. Dieser Vorgang erfolgt mittels eines Sprühverfahrens. Somit können beim Stand der Technik die benötigten Geometrien nicht immer optimal realisiert werden, da die wärmedämmende Oberflächenbeschichtung entweder nicht gleichmäßig aufgebracht werden kann oder Teile der Ausnehmung verschließen kann. Es können sich durch die Wärmedämmschicht auch Stufen oder Kanten bilden, die das Strömungsverhalten negativ beeinflussen.

Zum Stand der Technik wird auf die EP 0 985 802 A1 verwiesen. Bei der dort beschriebenen Ausgestaltung ergibt sich durch die Wärmedämmschicht eine rückspringende Stufe mit einer Kante, an welcher sich die Strömung ablöst. Die Strömung kann dann nicht mehr effektiv durch einen Diffusor verzögert werden. In Abhängigkeit von der Dimensionierung der Ausnehmung und/oder der sich bildenden Stufe kann es vorkommen, dass der Austritt der Strömung des Kühlfluids bzw. der Kühlluft durch die Wärmedämmschicht behindert wird. Hierdurch kann anstelle der gewünschten Verzögerung durch die Diffusorform eine Beschleunigung der Strömung erfolgen, wodurch sich die Kühlwirkung erheblich verschlechtert. Derartige Vorgänge können beispielsweise bei Ausgestaltungen gemäß der US 2011/0305582 A1 auftreten. Aus diesem Grunde ist in dieser Druckschrift eine Nut vorgesehen, in welche die Kühlluft zunächst eingeleitet wird. Derartige Nuten müssen jedoch vor der Aufbringung einer Wärmedämmschicht abgedeckt werden, die Abdeckung wird nachfolgend wieder entfernt. All dies führt zu einer erheblichen Erhöhung der Herstellungskosten.

Aus der EP 2 937 513 A2 ist ein Zuleitungskanal für Kühlluft bekannt, welcher in seinem Auslaufbereich auf eine zentrale Rippe auftrifft, die Teil einer konvex ausgebildeten Aufprallwandung ist. Eine ähnliche Konstruktion offenbart die US 8 057 181 B1. Auch dort ist die Aufprallwandung gewölbt ausgebildet.

Der Erfindung liegt die Aufgabe zugrunde, eine Vorrichtung der eingangs genannten Art zu schaffen, welche bei einfachem Aufbau und einfacher, kostengünstiger Herstellbarkeit eine wirksame Effusionskühlung der Wandung eines Bauteils ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit eine Vorrichtung zur Kühlung einer Wandung eines Bauteils einer Gasturbine geschaffen worden. Entlang der Wandung des Bauteils strömt eine heiße Strömung parallel zur Oberfläche der Wandung. Die Wandung kann, wie erwähnt, eben oder gewölbt ausgebildet sein. In der Wandung des Bauteils ist erfindungsgemäß zumindest eine Ausnehmung ausgebildet, welche taschenartig ausgestaltet ist und sich zur Oberfläche der Wandung öffnet. In die Ausnehmung mündet zumindest ein Einströmkanal, welcher sich innerhalb der Wandung erstreckt und durch den Kühlluft zugeführt werden kann. Der Einströmkanal kann parallel zur Wandung oder in einem Winkel zur Wandung angeordnet sein. Die durch den Einströmkanal in die taschenartige Ausnehmung eingeleitete Kühlluft strömt nachfolgend aus der Ausnehmung und wird entlang der Oberfläche der Wandung des zu kühlenden Bauteils geleitet, damit eine Effusionskühlung stattfinden kann. Dabei wird die aus der Ausnehmung austretende Luft bevorzugt verlangsamt. Dieser Effekt wird dadurch erreicht, dass die Ausnehmung einen Diffusor bildet und sich somit in ihrem Querschnitt erweitert.

Die Wandung des zu kühlenden Bauteils ist üblicherweise mit einer Wärmedämmschicht beschichtet. Dies ist für die erfindungsgemäße Ausgestaltung jedoch nicht zwingend notwendig.

Erfindungsgemäß ist weiterhin vorgesehen, dass in der Ausnehmung eine Aufprallwandung ausgebildet ist, auf welche der aus dem Einströmkanal austretende Kühlluftstrahl aufprallt und weiter verteilt wird. Diese Aufprallwandung ist erfindungsgemäß doppelt konvex ausgebildet, ähnlich einem Löffelrücken. Somit bildet die Aufprallwandung einen Teil eines Drehellipsoids oder einer geometrisch ähnlichen Form.

Die Aufprallwandung ist somit, wie obenstehend beschrieben, konvex ausgebildet. Die Beschreibung als doppelt konvex bedeutet, dass die Wandung in einem Querschnitt, welcher durch eine Mittelachse des Einströmkanals definiert wird und senkrecht zur Wandung des zu kühlenden Bauteils ausgerichtet ist, konvex gewölbt ist. Die zweite konvexe Wölbung ist in einer zu der gerade beschriebenen Ebene senkrechten Ebene vorgesehen. Somit bildet die doppelt konvexe Aufprallwandung einen Teil einer Drehellipsoid-Kalotte oder einer Rotationsellipsoid-Kalotte. Der Fachmann versteht unter dem Begriff Kalotte, wie aus der darstellenden Geometrie bekannt, ein Segment, eine Kappe oder eine Haube des Ellipsoids. Bei einem Drehellipsoid der beschriebenen Art ist die längere Achse des zugrunde gelegten Ellipsoids in der Ebene angeordnet, welche die Mittelachse des Einströmkanals umfasst und senkrecht zur Wandung des zu kühlenden Bauteils angeordnet ist. In bevorzugter Ausgestaltung ist die Rotationsachse (längere Achse des Ellipsoids) in einem Winkel zur Mittelachse des Einströmkanals angeordnet. Dieser Winkel kann zwischen 5° und 45° betragen, bevorzugterweise ist dieser Winkel der Rotationsachse des Rotationsellipsoids mit 20° angestellt. Dabei ist darauf hinzuweisen, dass die Anordnung und Ausrichtung der Rotationsachse oder Drehachse des Rotationsellipsoids nicht gleich sein muss zu dem Aufprallwinkel, welcher nachfolgend beschrieben wird.

Bei einer durch eine Wärmedämmschicht beschichteten Wandung des zu kühlenden Bauteils sind somit auch die Ausnehmung und damit auch die Aufprallwandung mit der Wärmedämmschicht beschichtet. Derartige Wärmedämmschichten werden üblicherweise aufgesprüht. Der durch den Einströmkanal zugeführte Kühlluftstrahl prallt somit auf die Aufprallwandung mit einem spitzen Winkel auf, beispielsweise mit einem Winkel zwischen 15° und 45°, bevorzugt in einem Winkel von 30°. Die doppelt konvex ausgebildete Aufprallwandung verteilt den Kühlluftstrahl. Durch den sich erweiternden Querschnitt der Ausnehmung wird ein gekrümmter Diffusor gebildet, welcher die Strömungsgeschwindigkeit verzögert und die Kühlluft seitlich, bezogen auf die Mittelachse des Einströmkanals, verteilt. Am Ende des Diffusors (am Ende der Ausnehmung) geht die Strömung tangential ohne jegliche Kante in die Oberfläche der Wandung des Bauteils über.

Die doppelt konvexe Kontur der Aufprallwandung innerhalb der Ausnehmung wird bei der Herstellung der Wandung des Bauteils ausgebildet, die nachfolgende Beschichtung mit der Wärmedämmschicht erfolgt gleichmäßig, so dass die Kontur erhalten bleibt.

Die Erfindung ist insbesondere bei Brennkammerwänden anwendbar, sie kann jedoch auch bei anderen zu kühlenden Bauelementen, beispielsweise bei Turbinenschaufeln, verwendet werden.

Erfindungsgemäß sind üblicherweise an der Wandung des zu kühlenden Bauteils eine Vielzahl von Ausnehmungen vorgesehen, die jeweils über zumindest einen Einströmkanal mit Kühlluft versorgt werden. Die einzelnen Ausnehmungen sind benachbart zueinander angeordnet, miteinander jedoch nicht verbunden.

Die Mittelachse des Einströmkanals der Kühlluft kann erfindungsgemäß entweder parallel zur Oberfläche der Wandung des zu kühlenden Bauteils verlaufen oder in einem Winkel angeordnet sein. In jedem Fall trifft der aus dem Einströmkanal austretende Kühlluftstrahl auf die doppelt konvex ausgebildete Aufprallwandung innerhalb der taschenartigen Ausnehmung und wird infolgedessen gleichmäßig verteilt und durch die Diffusorform der Ausnehmung verzögert. In jedem Falle strömt die Kühlluft nachfolgend ohne jegliche Stufe auf die Oberfläche der zu kühlenden Wandung und legt sich als Effusionsfilm auf die Oberfläche. Dabei ist es besonders günstig, wenn die Aufprallwandung symmetrisch zu einer die Mittelachse des Einströmkanals umfassenden und senkrecht zur Wandung des Bauteils angeordneten Symmetrieebene ausgebildet ist. Hierdurch wird sichergestellt, dass die austretende Kühlluft beidseitig der doppelt konvexen Aufprallwandung gleichmäßig verteilt und auf die Oberfläche der Wandung des Bauteils aufgelegt wird.

Im Falle eines in Form einer Brennkammerschindel ausgebildeten Bauteils kann das Bauteil generativ, d.h., mittels eines additiven Verfahrens, beispielsweise mittels eines Laserauftragsverfahrens, hergestellt werden. Nachfolgend wird die Wärmedämmschicht gleichmäßig über die gesamte Oberfläche der Wandung des Bauteils aufgetragen und beschichtet somit auch die Ausnehmung sowie die in dieser vorgesehene doppelt konvexe Aufprallwandung. Die Wärmedämmschicht hat erfindungsgemäß keine Auswirkung auf die Durchflusscharakteristik, weil die erfindungsgemäße Konstruktion der Ausnehmung und der Aufprallwandung keine Verstopfungen beim Aufbringen der Wärmedämmschicht auftreten lassen. Erfindungsgemäß legt sich somit der aus dem Einströmkanal austretende Kühlluftstrahl auf die Aufprallwandung innerhalb der taschenförmigen Ausnehmung und wird durch die konvexe Form, welche der Form entgegengesetzt gewölbt ist, angelegt. Aus der Tasche tritt dann eine bereits auf der Oberfläche der Aufprallwandung anliegende Strömung aus und legt sich auf die Oberfläche des zu kühlenden Bauteils. Hierbei treten keine Diskontinuitäten und keine Stufen auf, welche die Strömung beeinträchtigen würden. Durch die langgezogene Krümmung der Aufprallwandung, welche einen Teil des Diffusors bildet, ergibt sich eine Art Coanda-Effekt, durch welchen die Strömung in eine wandparallele Richtung umgelenkt wird. Insgesamt ergibt sich erfindungsgemäß eine deutliche Verbesserung der Filmkühlwirkung, die auch bei starken Druckschwingungen, beispielsweise in einer Brennkammer, sowie bei hohen Ausblaseraten von Kühlluft durch den Einströmkanal, erhalten bleibt.

Durch die erfindungsgemäß vorgesehene Fertigung mittels eines generativen oder additiven Verfahrens (Laseraufschmelzverfahren oder ähnliches) ist es möglich, die Geometrie der Aufprallwandung den jeweiligen Erfordernissen anzupassen und diese insbesondere zur Mittelachse des Einströmkanals passend auszurichten. Bei einer Fertigung des Einströmkanals mittels eines Bohrverfahrens wäre dies nicht möglich.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine perspektivische schematische Darstellung eines Ausführungsbeispiels der erfindungsgemäßen Vorrichtung,
- Fig. 3: eine vereinfachte Schnittansicht, analog Fig. 2,
- Fig. 4: eine vereinfachte Draufsicht analog den Fig. 2 und 3,
- Fig. 5 und 6: Detail-Schnittansichten in Ebenen senkrecht zur Oberfläche der Wandung,
- Fig. 7: eine Draufsicht gemäß dem Stand der Technik, und
- Fig. 8: eine Draufsicht des erfindungsgemäßen Ausführungsbeispiels.

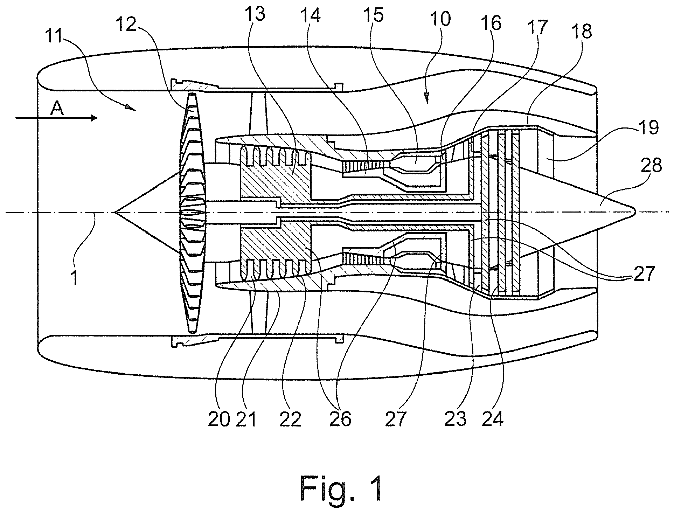

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kerntriebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1.

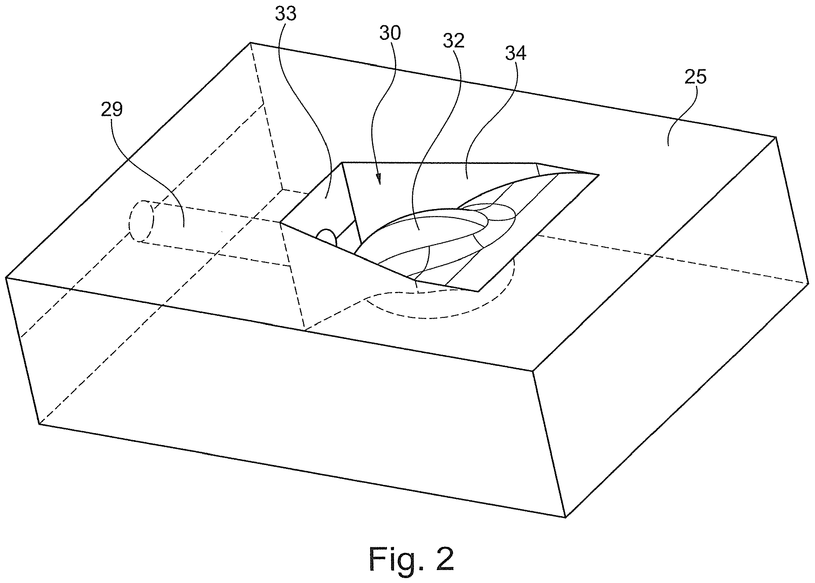

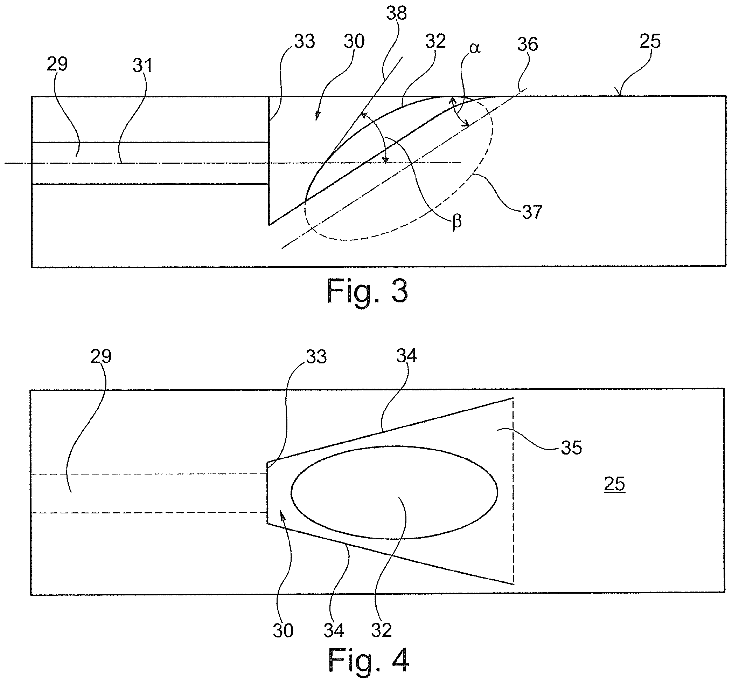

Die Fig. 2 zeigt in perspektivischer Ansicht einen Teil einer erfindungsgemäßen Wandung 25 eines Bauteils, beispielsweise einer Brennkammerschindel. Die Wandung 25 weist eine Oberfläche auf, entlang derer eine Heißgasströmung strömt. Um die Oberfläche der Wandung 25 zu kühlen, ist ein Einströmkanal 29 vorgesehen, welcher sich parallel zu der Oberfläche der Wandung 25 erstreckt, so wie dies auch in den Fig. 3 bis 6 dargestellt ist. Der Einströmkanal 29 weist eine Mittelachse 31 auf und ist bei dem gezeigten Ausführungsbeispiel mit einem kreisförmigen Querschnitt versehen.

In der Wandung 25 ist eine Ausnehmung 30 ausgebildet, welche taschenartig ausgestaltet ist und eine Rückwand 33 umfasst, in der der Einströmkanal 29 mündet. Weiterhin umfasst die taschenartige Ausnehmung 30 Seitenwände 34, welche in einem Winkel zu der Mittelachse 31 angeordnet sind, so dass die Ausnehmung 30 sich, ausgehend von Rückwand 33, diffusorartig erweitert.

Gegenüberliegend zu der Ausströmöffnung des Einströmkanals 29 ist in der Ausnehmung 30 eine Aufprallwandung 32 angeordnet, welche in Form eines Segments eines Drehellipsoids oder eines Löffelrückens ausgestaltet ist und somit, bezogen auf eine Mittelachse, doppelt konvex ausgebildet ist. Das Segment des Drehellipsoids wird mathematisch auch als Drehellipsoid- oder Rotationsellipsoid-Kalotte oder Kappe oder Haube bezeichnet. Die Fig. 3 zeigt eine Ansicht in einer Schnittebene, welche die Mittelachse 31 des Einströmkanals 29 umfasst und senkrecht zur Wandung 25 des zu kühlenden Bauteils angeordnet ist. Diese Ebene, welche eine Symmetrieebene für das Drehellipsoid oder Rotationsellipsoid 37 bildet, ist somit die Zeichenebene der Fig. 3. Mit dem Bezugszeichen 36 ist eine Rotationsachse des Rotationsellipsoids 37 dargestellt. Dies ist die längere Achse der zugrundeliegenden Ellipse. Die Rotationsachse 36 ist in einem Winkel α zur Wandung 25 angeordnet, welcher zwischen 5° und 45° betragen kann. Bevorzugterweise beträgt dieser Winkel α 20°. Das Drehellipsoid ist in der Seitenansicht der Fig. 3 in seinem restlichen Teil gestrichelt dargestellt. Wie die Fig. 3 zeigt, trifft ein aus dem Ausströmkanal 29 austretender Kühlluftstrahl in einem spitzen Winkel β auf die Aufprallwandung 32 und wird gleichmäßig zu beiden Seiten umgelenkt. Dieser Winkel β wird zwischen der Mittelachse 31 und einer Tangente 38 am Schnittpunkt der Mittelachse 31 mit der Aufprallwandung 32 gebildet und beträgt beispielsweise zwichen 15° und 45°, bevorzugt 30°. Die Kühlluft gleitet somit über die Aufprallwandung 32 und tritt nachfolgend glatt aus der Ausnehmung 30 aus. Dies bedeutet, dass keine Stufe oder ähnliches gebildet ist. Somit legt sich die Strömung ungestört auf die Oberfläche der Wandung 25 auf.

Die Fig. 4 verdeutlicht nochmals die diffusorartige Erweiterung der Ausnehmung 30.

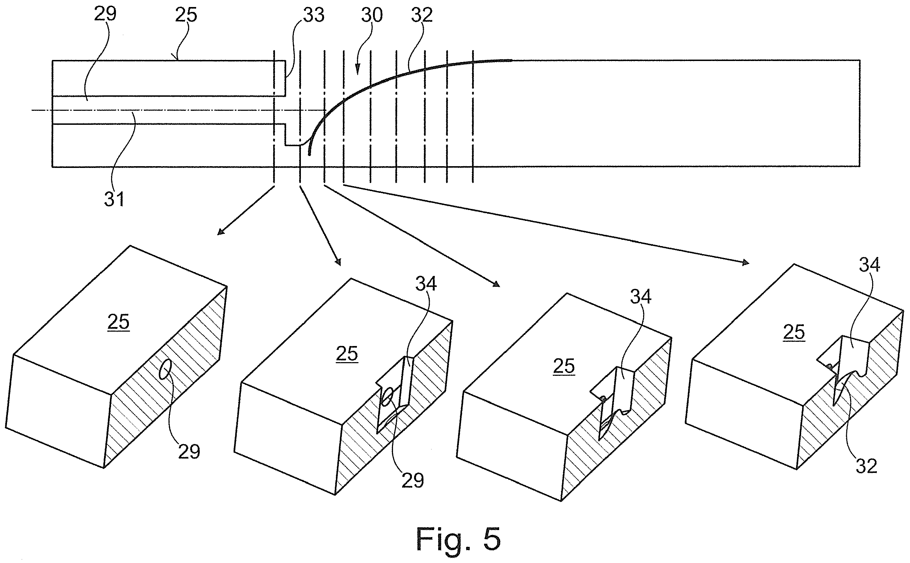

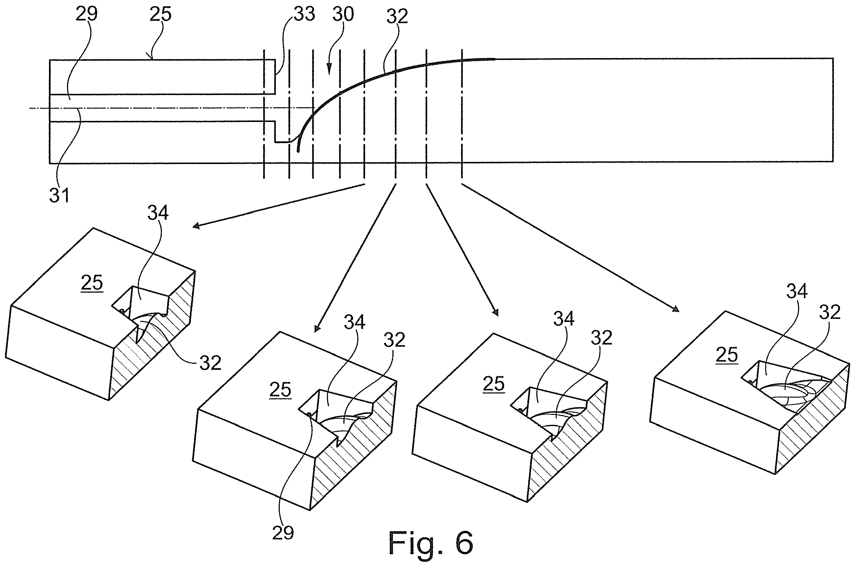

Die Fig. 5 und 6 zeigen jeweils perspektivische Schnittansichten längs Schnittebenen, welche senkrecht zur Oberfläche der Wandung 25 angeordnet sind, so wie sich dies durch die Zuordnung der einzelnen Schnitte aus den Fig. 5 und 6 ergibt. Dabei ist insbesondere nochmals die doppelt konvexe Ausgestaltung der Aufprallwandung ersichtlich. Weiterhin ist ersichtlich, dass die Aufprallwandung 32 symmetrisch zu einer die Mittelachse 31 umfassenden und senkrecht zur Oberfläche der Wandung 25 stehenden Symmetrieebene ist.

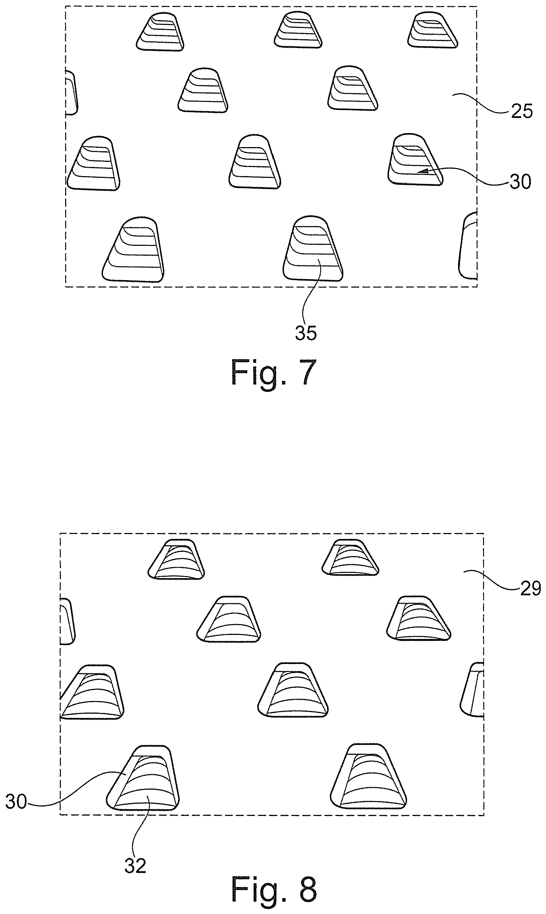

Die Fig. 7 und 8 zeigen jeweils Anordnungen von Ausnehmungen 30, welche in einer Wandung 25 eines Bauteils ausgebildet sind. Dabei zeigt die Fig. 7 eine Ausgestaltung gemäß dem Stand der Technik, bei welcher die Grundflächen 35 der Ausnehmungen 30 glatt oder eben ausgebildet sind, während die Fig. 8 eine erfindungsgemäße Ausgestaltung mit doppelt konvexen Aufprallwandungen 32 darstellt. Aus den Fig. 7 und 8 ist ersichtlich, dass die einzelnen Ausnehmungen 30 miteinander nicht verbunden sind, sondern in einer regelmäßigen Anordnung zueinander platziert sind, um eine gleichmäßige Ausbildung eines Kühlfilms auf der Oberfläche der Wandung 25 zu erreichen.

Bei den gezeigten Ausführungsbeispielen wurde zum Zwecke der Verdeutlichung der Darstellung auf die Darstellung einer Wärmedämmschicht verzichtet, die auf der Oberfläche der Wandung 25 sowie zumindest auf der Grundfläche 35 und der Aufprallwandung 32 als Sprühbeschichtung aufgebracht sein kann.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kerntriebwerksgehäuse
- 22: Kompressorlaufschaufeln
- 23: Leitschaufeln
- 24: Turbinenrotorschaufeln
- 25: Wandung
- 26: Kompressortrommel oder -scheibe
- 27: Turbinenrotornabe
- 28: Auslasskonus
- 29: Einströmkanal
- 30: Ausnehmung
- 31: Mittelachse
- 32: Aufprallwandung
- 33: Rückwand
- 34: Seitenwand
- 35: Grundfläche
- 36: Rotationsachse
- 37: Rotationsellipsoid
- 38: Tangente

## Patentansprüche

1. Vorrichtung zur Kühlung einer Wandung (25) eines Bauteils einer Gasturbine, wobei eine Strömung parallel zur Wandung (25) strömt, mit zumindest einem in der Wandung (25) ausgebildeten Einströmkanal (29), welcher zur Zuführung von Kühlluft in eine Ausnehmung (30) der Wandung (25) mündet, wobei eine Mittelachse (31) des Einströmkanals (29) auf eine doppelt konvex ausgebildete Aufprallwandung (32) der Ausnehmung (30) ausgerichtet ist, **dadurch gekennzeichnet, dass** die Aufprallwandung (32) als Kalotte eines Rotationsellipsoids ausgebildet ist.

2. Vorrichtung nach Anspruch 1, **dadurch gekennzeichnet, dass** die Mittelachse (31) des Einströmkanals (29) parallel oder in einem Winkel zur Oberfläche der Wandung (25) des Bauteils angeordnet ist.

3. Vorrichtung nach einem der Ansprüche 1 oder 2, **dadurch gekennzeichnet, dass** die Aufprallwandung (32) symmetrisch zu einer die Mittelachse (31) des Einströmkanals (29) umfassenden und senkrecht zur Wandung (25) des Bauteils angeordneten Symmetrieebene ausgebildet ist.

4. Vorrichtung nach einem der Ansprüche 1 bis 3, **dadurch gekennzeichnet, dass** die Mittelachse (31) des Einströmkanals (29) mittig auf die Aufprallwandung (32) auftrifft.

5. Vorrichtung nach einem der Ansprüche 1 bis 4, **dadurch gekennzeichnet, dass** die Wandung (25) des Bauteils und die Aufprallwandung (32) mit einer Wärmeschutzschicht beschichtet sind.

6. Vorrichtung nach einem der Ansprüche 1 bis 5, **dadurch gekennzeichnet, dass** der Übergangsbereich von der Aufprallwandung (32) zur Wandung (25) des Bauteils stufenlos ausgebildet ist.

7. Vorrichtung nach einem der Ansprüche 1 bis 6, **dadurch gekennzeichnet, dass** die Ausnehmung (30) in Form eines Diffusors ausgebildet ist.

8. Vorrichtung nach einem der Ansprüche 1 bis 7, **dadurch gekennzeichnet, dass** die Ausnehmung (30) als singuläre, zur Oberfläche der Wandung (25) des Bauteils geöffnete Ausnehmung ausgebildet ist.

9. Vorrichtung nach einem der Ansprüche 1 bis 8, **dadurch gekennzeichnet, dass** das Bauteil in Form einer Brennkammerschindel ausgebildet ist.

## Claims

1. Device for cooling a wall (25) of a component of a gas turbine, wherein a flow passes parallel to the wall (25), having at least one inflow duct (29) provided in the wall (25) that issues into a recess (30) of the wall (25) for supplying cooling air, wherein a center axis (31) of the inflow duct (29) is aligned to an impact wall (32) of double-convex design of the recess (30), **characterized in that** the impact wall (32) is designed as a spheroid dome of a rotational ellipsoid.

2. Device in accordance with Claim 1, **characterized in that** the center axis (31) of the inflow duct (29) is arranged parallel or at an angle to the surface of the wall (25) of the component.

3. Device in accordance with one of the Claims 1 or 2, **characterized in that** the impact wall (32) is designed symmetrical to a symmetry plane including the center axis (31) of the inflow duct (29) and arranged perpendicular to the wall (25) of the component.

4. Device in accordance with one of the Claims 1 to 3, **characterized in that** the center axis (31) of the inflow duct (29) intersects with the center of the impact wall (32).

5. Device in accordance with one of the Claims 1 to 4, **characterized in that** the wall (25) of the component and the impact wall (32) are provided with a thermal barrier coating.

6. Device in accordance with one of the Claims 1 to 5, **characterized in that** the transition area from the impact wall (32) to the wall (25) of the component is designed without any steps.

7. Device in accordance with one of the Claims 1 to 6, **characterized in that** the recess (30) is designed in the form of a diffuser.

8. Device in accordance with one of the Claims 1 to 7, **characterized in that** the recess (30) is designed as a singular recess opened towards the surface of the wall (25) of the component.

9. Device in accordance with one of the Claims 1 to 8, **characterized in that** the component is designed in the form of a combustion chamber tile.

## Revendications

1. Dispositif destiné à refroidir une paroi (25) appartenant à un composant d'une turbine à gaz, sachant qu'un flux s'écoule parallèlement à la paroi (25), avec au moins un canal d'admission (29) formé dans la paroi (25), qui débouche dans un évidement (30) de la paroi (25) pour amener de l'air de refroidissement, sachant qu'un axe médian (31) du canal d'admission (29) est orienté vers une paroi d'impact (32) doublement convexe de l'évidement (30), **caractérisé en ce que** la paroi d'impact (32) est conçue sous forme de calotte d'un ellipsoïde de révolution.

2. Dispositif selon la revendication n° 1, **caractérisé en ce que** l'axe médian (31) du canal d'admission (29) est disposé parallèle ou dans un angle défini par rapport à la surface de la paroi (25) du composant.

3. Dispositif selon une des revendications n° 1 ou n° 2, **caractérisé en ce que** la paroi d'impact (32) est conçue de manière symétrique par rapport à un plan de symétrie comprenant l'axe médian (31) du canal d'admission (29) et perpendiculaire à la paroi (25) du composant.

4. Dispositif selon une des revendications n° 1 à n° 3, **caractérisé en ce que** l'axe médian (31) du canal d'admission (29) rencontre la paroi d'impact (32) en son milieu.

5. Dispositif selon une des revendications n° 1 à n° 4, **caractérisé en ce que** la paroi (25) du composant et la paroi d'impact (32) sont recouvertes d'une couche de protection thermique.

6. Dispositif selon une des revendications n° 1 à n° 5, **caractérisé en ce que** la zone transitoire allant de la paroi d'impact (32) à la paroi (25) du composant est conçue en continu.

7. Dispositif selon une des revendications n° 1 à n° 6, **caractérisé en ce que** l'évidement (30) est conçu sous la forme d'un diffuseur.

8. Dispositif selon une des revendications n° 1 à n° 7, **caractérisé en ce que** l'évidement (30) est conçu sous forme d'évidement singulier, ouvert en direction de la surface de la paroi (25) du composant.

9. Dispositif selon une des revendications n° 1 à n° 8, **caractérisé en ce que** le composant est conçu sous la forme d'un bardeau de chambre de combustion.
